# EUROPÄISCHE PATENTSCHRIFT

(11) **EP 2 991 786 B1**
(45) Veröffentlichungstag und Bekanntmachung des Hinweises auf die Patenterteilung: **13.12.2017**
(21) Anmeldenummer: 14721308.6
(22) Anmeldetag: 28.04.2014
(51) Int. Cl.: B21F 27/18, B21F 33/00, F16L 27/073

(54) **VERFAHREN ZUR HERSTELLUNG EINES DRAHTFORMKÖRPERS AUS EINEM DRAHTGEWEBE SOWIE DRAHTFORMKÖRPER**
METHOD FOR PRODUCING A SHAPED WIRE ELEMENT FROM A WIRE MESH, AND A SHAPED WIRE ELEMENT
PROCÉDÉ DE FABRICATION D'UN CORPS FAÇONNÉ EN FILS MÉTALLIQUES À PARTIR D'UN TISSU MÉTALLIQUE, ET CORPS FAÇONNÉ EN FILS MÉTALLIQUES CORRESPONDANT

(30) Priorität: 03.05.2013 DE 102013007615
(43) Veröffentlichungstag der Anmeldung: 09.03.2016
(73) Patentinhaber: Rhodius GmbH, 91781 Weissenburg (DE)
(72) Erfinder: APPEL, Erwin, 91785 Pleinfeld (DE)
(74) Vertreter: Manitz Finsterwald Patentanwälte PartmbB
(86) Internationale Anmeldenummer: PCT/EP2014/058589
(87) Internationale Veröffentlichungsnummer: WO 2014/177511

(56) Entgegenhaltungen:
- DE-A1-102007 005 588
- US-A- 3 390 709
- US-A- 6 116 643

## Beschreibung

Die Erfindung betrifft ein Verfahren zur Herstellung eines Drahtformkörpers aus einem Drahtgewebe. Ferner betrifft die Erfindung einen durch plastisches Verformen aus einem Drahtgewebe hergestellten Drahtformkörper.

Es ist seit langem bekannt, aus Drähten Drahtformkörper zu fertigen. Hierzu werden als Ausgangsmaterial insbesondere Drahtgestricke, aber auch Drahtgewebe oder Drahtgewirke verwendet, die durch plastisches Verformen in die gewünschte Endgestalt umgeformt werden. Die so hergestellten Drahtformkörper werden für unterschiedlichste Anwendungszwecke verwendet und kommen unter anderem als Filter oder Kühlelemente für flüssige und/oder gasförmige Medien zum Einsatz.

Bei der Herstellung derartiger Drahtformkörper werden die für den jeweiligen Einsatzzweck besonders wesentlichen physikalischen Eigenschaften, beispielsweise die Wärmeleitfähigkeit, der Strömungswiderstand, etc., bereits bei der Fertigung des für die Herstellung des Drahtformkörpers zu verwendenden Ausgangsmaterials berücksichtigt. So wird beispielsweise die Wärmeleitfähigkeit durch Auswahl der zu verarbeitenden Drähte hinsichtlich Drahtmaterial und Drahtdicke vorbestimmt. Das Strömungsverhalten wird durch Verwendung bestimmter Drahtquerschnittsformen und/oder durch Einstellen der Maschen-, Gewebe- oder Gewirkdichte, d.h. der sich nach dem Stricken, Weben oder Wirken ergebenden Öffnungsquerschnitte zwischen benachbart angeordneten Drähten, gezielt beeinflusst. Ferner ist es auch üblich, Drahtgestricke, Drahtgewebe oder Drahtgewirke aus einem oder mehreren Drähten herzustellen, um bestimmte physikalische Eigenschaften beim fertigen Drahtformkörper einzustellen.

Aus den sich durch das Stricken, Weben oder Wirken ergebenden Ausgangsmaterial werden häufig Zwischenprodukte gefertigt, aus denen anschließend durch plastisches Umformen die eigentlichen Drahtformkörper hergestellt werden.

Üblicherweise werden die Drahtformkörper je nach Einsatzzweck entweder zu flächigen Bauteilen oder zu Formkörpern, beispielsweise zu Zylindern oder Hohlzylindem mit rundem oder ovalem Querschnitt, zu Prismen mit polygonalem Querschnitt oder ähnlichem, umgeformt.

Insbesondere bei der Herstellung von zylinder- oder hohlzylinderförmigen Drahtformkörpern werden üblicherweise Schläuche aus Drahtgestrick verwendet, da Drahtgestrickschläuche verhältnismäßig einfach und mit hoher Effizienz gefertigt werden können.

Nachteilig bei der Verwendung eines Drahtgestrickschlauches für die Herstellung eines Drahtformkörpers ist jedoch, dass der Drahtgestrickschlauch aufgrund der Verwendung sogenannter Rundstrickmaschinen üblicherweise als Endlosschlauch gestrickt werden muss. Der Endlosschlauch muss dann anschließend in Schlauchabschnitte geschnitten werden, die eine für die Herstellung des Drahtformkörpers geeignete Länge aufweisen.

Aufgrund der Maschenstruktur des Drahtgestrickschlauches werden jedoch beim Schneiden des Endlosschlauches in Schlauchabschnitte die Maschen unregelmäßig durchtrennt, so dass kürzere und längerer Drahtabschnitte, die sogenannten Häcksel, entstehen. Ein Teil dieser entstehenden Häcksel bleibt in der Maschenstruktur des Schlauchabschnittes hängen und kann nur unter großem Aufwand manuell aus der Maschenstruktur entfernt werden. Bei gröberen Maschenstrukturen wird zwar versucht, die in der Maschenstruktur hängenden Häcksel durch Umschlagen oder Umstülpen der Schlauchabschnitte zu lösen, jedoch müssen auch die so behandelten Schlauchabschnitte nachkontrolliert und gegebenenfalls noch von in der Maschenstruktur auch nach dem Umstülpen hängenden Häcksel befreit werden. So gibt es Einsatzbereiche, die eine 100% häckselfreies Ausgangsmaterial für die Herstellung von Drahtformkörpern fordern, beispielsweise bei der Herstellung von Filtern für Airbags, wodurch der Aufwand bei der Herstellung derartiger Produkte dramatisch ansteigt, da jeder Schlauchabschnitt geprüft und gegebenenfalls noch manuell von Häckseln befreit werden muss.

Unabhängig davon führen die beim Schneiden entstehenden Häcksel zu einer deutlichen Erhöhung des Materialeinsatzes. So liegt der Anteil an Häcksels bezogen auf die Gesamtmenge verstrickten Drahtmaterials erfahrungsgemäß bei bis zu 10%, so dass 10% des eingesetzten Drahtmaterials als Abfall entsorgt werden müssen.

Ein weiterer Nachteil besteht in der Tatsache, dass der Draht vor dem Verstricken mit Schmiermitteln vorbehandelt werden muss, damit der Strickvorgang ordnungsgemäß durchgeführt werden kann. Werden die Schmiermittel nach dem Verstricken nicht entfernt, haften diese noch an der Oberfläche des Drahtes auch nach dem Ausformen Drahtformkörpers an. In vielen Einsatz fällen ist jedoch anhaftendes Schmiermittel unerwünscht, da es beispielsweise die Wirkungsweise des Drahtformkörpers nachteilig beeinflussen kann. Als Beispiel wird die Verwendung des fertigen Drahtformkörpers als Kühlelement genannt, mit dem beispielsweise Gase mit Temperaturen von mehreren hundert Grad-Celsius abgekühlt werden sollen. Aus diesem Grund wird häufig von Kunden gefordert, dass die fertigen Drahtformkörper frei von Verunreinigungen, insbesondere frei von Schmiermitteln sind.
Seit geraumer Zeit wird nun versucht, anstelle von Drahtgestricken als Ausgangsmaterial Drahtgewebe zu verwenden. Bei flächigen Drahtformkörpern ist dies zumindest eingeschränkt bereits möglich. Das Ausformen von Formkörpern, also Zylindern, Hohlzylindern. Prismen und ähnlichen Formkörpern ist jedoch nur sehr eingeschränkt möglich, da das Drahtgewebe einerseits dazu neigt, an seinen Rändern auszufransen und andererseits beim plastischen Verformen unerwünschte Oberflächenunregelmäßigkeiten entstehen.

Aus der gattungsgemäßen DE 10 2007 005 588 A1 ist ein Verfahren zur Herstellung eines Drahtformkörpers aus einem Drahtgewebe bekannt, bei dem ein Gewebeabschnitt definierter Länge quer zu seiner Längsrichtung auf sich selbst aufgewickelt wird und der auf sich selbst aufgewickelte Gewebeabschnitt zu einem Zwischenprodukt verdichtet wird. Der gewickelte Gewebeabschnitt wird vor dem Umformen in das Zwischenprodukt so aufgewickelt, dass sich eine ganzzahlige Anzahl von Wicklungen ergibt. Anschließend wird bei dem bekannten Verfahren das Zwischenprodukt durch axiales Stauchen in den Drahtformkörper derart umgeformt, dass die Umfangsoberfläche des Drahtformkörpers einen zumindest annähernd stetigen, gleichmäßigen Verlauf zeigt.

Es ist die Aufgabe der Erfindung, ein verbessertes Verfahren zur Herstellung eines Drahtformkörpers aus einem Drahtgewebe bzw. einen nach dem Verfahren hergestellten Drahtformkörper bereitzustellen.

Diese Aufgabe wird durch die Merkmale der unabhängigen Ansprüche gelöst.

Mit dem erfindungsgemäßen Verfahren ist es erstmalig möglich einen Drahtformkörper aus einem Drahtgewebe zu fertigen, der eine zylindrische oder hohlzylindrische Form aufweist. In diesem Zusammenhang ist zu bemerken, dass erfmdungsgemäß der Begriff Zylinder oder Hohlzylinder nicht nur Zylinder oder Hohlzylinder mit runder oder ovaler Querschnittsform erfasst, sondern auch Formkörper in Prismenform also mit mehreckiger Querschnittsform. Erfindungsgemäß wird vorgeschlagen, einen Gewebeabschnitt aus Draht quer zu seiner Längsrichtung zunächst auf sich selbst aufzuwickeln. Die Länge des Gewebeabschnittes sowie die Anzahl von Wicklungen ist dabei so vorbestimmt, dass der Gewebeabschnitt nach dem Aufwickeln und dem sich anschließenden Entspannen mit seiner im inneren angeordnete Vorderkante derart zu seiner außen an der Umfangsoberfläche des aufgewickelten Gewebeabschnittes anliegenden Endkante verläuft, dass über den gesamten Umfang des aufgewickelten Gewebeabschnittes betrachtet immer die gleiche Anzahl Gewebelagen aufeinander liegt. Anders gesagt, soll über die gesamte axiale Länge quer zur Wicklungsrichtung gesehen immer dieselbe Anzahl an Gewebelagen aufeinander angeordnet sein. Auf diese Weise wird erreicht, dass für die nachfolgenden Verfahrensschritte immer die gleiche Anzahl an Gewebelagen verformt wird und eine entsprechend gleichmäßige Verformung auftritt.

In einem sich an das Aufwickeln anschließenden Verfahrensschritt wird der auf sich selbst aufgewickelte Gewebeabschnitt quer zu seiner Längsrichtung, also radial bezüglich seiner imaginären Wickelachse verdichtet. Durch diesen Verdichtungsvorgang werden die einzelnen unmittelbar aneinander anliegenden Gewebelagen ineinander gepresst und bilden so eine über den gesamten Querschnitt des Zwischenproduktes betrachtet verdichtete Gewebestruktur mit im wesentlichen einheitlicher Dichte.

Das so vorgeformte Zwischenprodukt wird anschließend durch axiales Stauchen zu dem Drahtformkörper umgeformt. Hierbei kann das axiale Stauchen des Zwischenproduktes entweder nur einseitig erfolgen, d.h., das Zwischenprodukt wird nur an seinem einen axialen Ende gestaucht, während das andere axiale Ende lediglich abgestützt wird. Vorzugsweise erfolgt aber das axiale Stauchen beidseitig, d.h. das Zwischenprodukt wird zwischen zwei bewegliche Stempel positioniert, die zum axialen Stauchen des Zwischenproduktes aufeinander zubewegt werden, um das Zwischenprodukt umzuformen. Dabei wird das Zwischenprodukt in seine endgültige Form umgeformt, wobei die durch das vorgeordnete definierte Aufwickeln und Vorformen des gewickelten Gewebeabschnittes in das Zwischenprodukt an der Umfangsoberfläche des Drahtformkörpers ein zumindest annähernd stetiger, gleichmäßiger Verlauf erhalten bleibt. Das Ausformen des Drahtformkörpers erfolgt vorzugsweise in einer Negativform, in die das Zwischenprodukt eingesetzt und anschließend axial zu dem Drahtformkörper axial gestaucht wird. Die Innenabmessung und Gestaltung der Negativform ist dabei komplementär zu der späteren Abmessung und Gestalt des fertigen Drahtformkörpers ausgeführt.

Anders als von der Fachwelt bisher angenommen, ist es mit dem erfindungsgemäßen Verfahren erstmals möglich, aus flachen Gewebeabschnitten durch Aufwickeln und Umformen Drahtformkörper zu fertigen, die eine zylindrische oder auch hohlzylindrische Gestalt aufweisen.

Aufgrund der aus Kettdrähten und Schußdrähten gebildeten geradlinigen Webstruktur von Drahtgeweben können diese ohne Entstehung von Häckseln in Gewebeabschnitte definierte Länge geschnitten werden. Verglichen mit der Verarbeitung von Drahtgestrickschläuchen und Drahtgestricken ist auch ein präziseres Schneiden der Drahtgewebe in die Gewebeabschnitte möglich, da die Gewebeabschnitte aufgrund ihrer geradlinigen Webstruktur sehr genau geschnitten werden können. Unabhängig davon ist der Einsatz von Schmiermitteln beim Weben von Drähten gleichfalls entbehrlich, so dass auch ein nachfolgendes, aufwendiges Reinigen der zu verarbeitenden Gewebeabschnitte entfällt.

Erfindungsgemäß wird der Gewebeabschnitt mit derart großer axialer Vorspannung aufgewickelt, dass er während des Aufwickelns zumindest abschnittsweise eine plastische Verformung erfährt. Auf diese Weise wird ein unbeabsichtigtes und unkontrolliertes Zusammenziehen des Gewebeabschnittes nach dem Aufwickeln vermieden, zumindest aber vermindert. Dies ist bei Gewebeabschnitten, die aufgrund ihrer Webart und/oder ihres Drahtmaterials sich elastisch verhalten, von besonderem Vorteil.

Weitere Vorteile der Erfindung ergeben sich aus der nachfolgenden Beschreibung, den Unteransprüchen und den Zeichnungen.
Soll ein hohlzylindrischer Drahtformkörper gefertigt werden, wird bei einer besonders bevorzugten Variante des erfindungsgemäßen Verfahrens der Gewebeabschnitt auf einen Wickeldorn aufgewickelt, so dass der Wickeldorn, den Gewebeabschnitt beim Aufwickeln innen abstützt und die gewünschte Durchgangsöffnung im Inneren des aufgewickelten Gewebeabschnittes erhalten bleibt. Der Wickeldorn ist dabei vorzugsweise so ausgeführt und bemessen, dass die Innenabmessungen der Durchgangsöffnung bereits nach dem Aufwickeln zumindest annähernd den Endmaßen des fertigen Drahtformkörpers entsprechen.
Bei einer bevorzugten Weiterbildung dieser Verfahrensvariante verbleibt der Wickeldorn zumindest solange im aufgewickelten Gewebeabschnitt, bis der Gewebeabschnitt zu dem Zwischenprodukt umgeformt worden ist. Auf diese Weise ist sichergestellt, dass der Gewebeabschnitt auch beim Umformen in das Zwischenprodukt nach innen nicht nachgibt, sondern seine gewünschte Form im Inneren erhalten bliebt. Dies ist insbesondere dann von Vorteil, wenn ein Gewebeabschnitt aus vergleichsweise dünnem Draht in wenigen Lagen gewickelt werden soll, der nicht über eine ausreichende Steifigkeit gegenüber den auftretenden Umformkräften beim Umformen des Gewebeabschnittes in das Zwischenprodukt verfügt.
Der Wickeldorn wird vorzugsweise zumindest vor dem axialen Stauchen des Zwischenproduktes in den Drahtformkörper entfernt, um das Umformen des Zwischenproduktes in den Drahtformkörper zu erleichtern. Es ist jedoch auch möglich, den Wickeldorn bis zum Abschluss des Umformens des Drahtformkörpers im Zwischenprodukt zu belassen und den Wickeldorn erst nach dem Ausformen des Drahtformkörpers aus dem dann fertigen Drahtformkörper zu ziehen. Bei letzterer Verfahrensvariante wird ein besonders präzises Ausformen des Drahtformkörpers erreicht.

Besonders von Vorteil ist die Länge des Gewebeabschnittes und den Grad der plastischen Verformung derart zu bemessen, dass sich der Gewebeabschnitt nach dem Aufwickeln soweit entspannt, dass er mit seiner im inneren angeordnete Vorderkante derart zu seiner außen an der Umfangsoberfläche des aufgewickelten Gewebeabschnittes anliegenden Endkante verläuft, dass über den gesamten Umfang des aufgewickelten Gewebeabschnittes betrachtet immer die gleiche Anzahl Gewebelagen aufeinander liegt. Durch diese Verfahrensführung wird erreicht, dass die bereits erfolgte plastische Verformung die nachfolgenden weiteren Verformungsschritte erleichtert. Es ist auch denkbar, dass plastische vorverformte Zwischenprodukt vor den weiteren Verfahrensschritten durch Wärmebehandlung, beispielsweise durch Glühen, soweit mechanisch zu entspannen, dass die nachfolgenden Umformschritte mit höheren Umformgraden realisiert werden können.
In Abhängigkeit von dem Grad der Verdichtung erfolgt bei einer Variante des erfindungsgemäßen Verfahrens während des Verdichtens des auf sich selbst aufgewickelten Gewebeabschnittes quer zu seiner Längsrichtung in das Zwischenprodukt gleichzeitig eine Streckung in Längsrichtung. Die Streckung erfolgt dabei entweder durch das Verdichten selbst, oder aber es wird durch axiales Längen unterstützt.
Als Ausgangsmaterial für das erfindungsgemäße Verfahren wird ein vorbereiteter Gewebeabschnitt mit vorgegebener Länge bereitgestellt. Alternativ ist es jedoch auch möglich, den Gewebeabschnitt unmittelbar vor dem Aufwickeln aus einem endlosen Drahtgewebeband quer zu dessen Längsrichtung zu schneiden. Bei der Verwendung eines endlosen Drahtgewebebandes besteht der Vorteil darin, dass die Länge des Gewebeabschnittes schnell und ohne großen Aufwand zur Fertigung unterschiedlich bemessener Endprodukte vorbereitet werden kann.
Als besonders vorteilhaft hat sich in Versuchsreihen gezeigt, wenn die Vorder- und die Endkante des Gewebeabschnittes nicht parallel zur imaginären Wickelachse, um die der Gewebeabschnitt gewickelt wird, verlaufen. Vielmehr ist es von Vorteil, wenn die Vorderkante und die hierzu komplementär ausgebildete Endkante unter einem Winkel schräg verlaufend zur Wickelachse ausgebildet bzw. geschnitten sind. Als besonders vorteilhaft hat sich die Verwendung eines Gewebeabschnittes gezeigt, bei dem die Vorderkante einen pfeilartige Ausnehmung mit zwei unter einem Winkel in einem Bereich von 75° bis 135°, besonders bevorzugt unter einem Winkel in einem Bereich von 90° bis 120°, verlaufenden Abschnitten gebildet ist, welche sich zumindest annähernd im Bereich der halben Breite des Gewebeabschnittes treffen, während die dann hierzu komplementär ausgebildete Endkante spitz zuläuft und aus zwei entsprechend zueinander verlaufenden Kantenabschnitten gebildet ist, welche sich gleichfalls im Bereich der halben Breite des Gewebeabschnittes treffen. Allerdings ist es auch möglich, Gewebeabschnitte zu verarbeiten, deren Vorder- und Endkanten jeweils rechtwinklig zur Längsrichtung des Gewebeabschnittes verlaufen.

Nachfolgend wird die Erfindung anhand einer Variante des erfindungsgemäßen Verfahrens unter Bezugnahme auf die Zeichnung näher erläutert. Hierin zeigt:
- Fig. 1: in schematischer Darstellung das Bereitstellen eines endlosen Drahtgewebebandes sowie das Schneiden des Drahtgewebebandes in einzelne Gewebeabschnitte,
- Fig. 2: in schematischer Darstellung das Aufwickeln eines Gewebeabschnittes auf einen Wickeldorn,
- Fig. 3: in schematischer Darstellung das radiale Verdichten eines auf sich selbst aufgewickelten Gewebeabschnittes zu einem Zwischenprodukt, wobei der Wickeldorn während des Verdichtens noch im aufgewickelten Gewebeabschnitt verblieben ist,
- Fig. 4: in schematischer Darstellung des axialen Stauchens des Zwischenproduktes in einen Drahtformkörper,
- Fig. 5: in schematischer Darstellung verschiedenen Prüfschritte des fertigen Drahtformkörpers, und
- Fig. 6: eine geschnittene Seitenansicht des mit dem erfindungsgemäßen Verfahren hergestellten Drahtformkörpers.

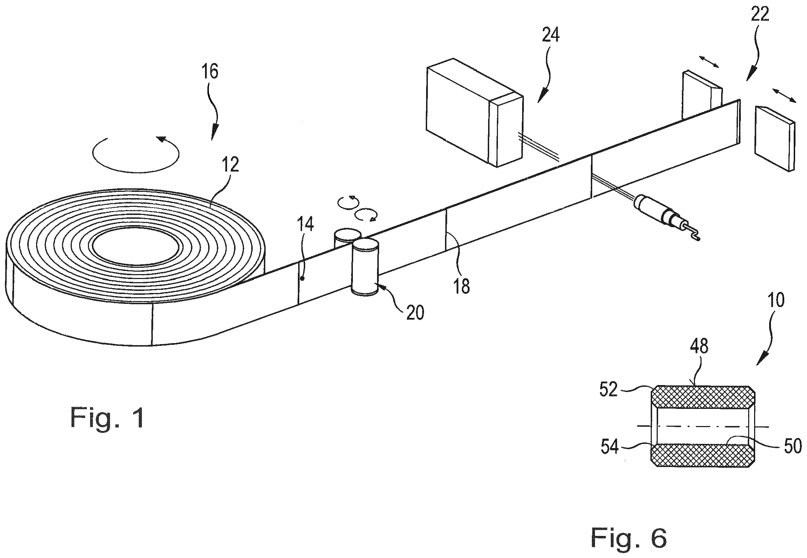

In Fig. 1 ist in schematischer Darstellung der erste Schritt des erfindungsgemäßen Verfahrens zur Herstellung eines Drahtformkörpers 10, wie er in Fig. 6 gezeigt ist, dargestellt. In diesem ersten Schritt wird ein auf einer Rolle 12 aufgewickeltes Drahtgewebeband 14 mit sehr großer Länge in einer Abwickelstation 16 bereitgestellt.

Das Drahtgewebeband 14 ist über seine Länge betrachtet gegebenenfalls mit gleichmäßig zueinander beanstandeten Markierungen 18 versehen. Als Markierung 18 können farbliche Markierungen dienen. Es ist jedoch auch möglich, durch Weglassen eines Schußdrahtes, also eines quer zur Längsrichtung des Drahtgewebebandes 14 verlaufenden Drahtes, eine Markierung im Drahtgewebeband 14 vorzusehen.

Das Drahtgewebeband 14 wird mit Hilfe einer in der Abwickelstation 16 vorgesehenen Abzugseinrichtung 20 von der Rolle 12 gezogen und in Abzugsrichtung A einer Schneideinrichtung 22 gefördert. Zwischen der Abzugseinrichtung 20 und der Schneideinrichtung 22 ist eine Erfassungseinrichtung 24 angeordnet, die im vorliegenden Fall als Lichtschranke mit Sensor ausgebildet ist, mit der die Markierungen 18 erfasst werden. Basierend auf der Abzugsgeschwindigkeit der Abzugseinrichtung 20 einerseits und dem Abstand zwischen der Erfassungseinrichtung 24 und Schneideinrichtung 22 andererseits kann nun mit Hilfe einer nicht näher gezeigten Steuerungseinrichtung exakt bestimmt werden, wann die Schneideinrichtung 22 das Drahtgewebeband 14 quer zu dessen Abzugsrichtung in einen Gewebeabschnitt 26 definierter Länge schneiden muss, wie durch die Pfeile in Fig. 1 angedeutet ist.

Nachdem das Drahtgewebeband 14 in den Gewebeabschnitt 26 definierter Länge geschnittenen worden ist, wird der Gewebeabschnitt 26 einer Aufwickelstation 28 zugeführt.

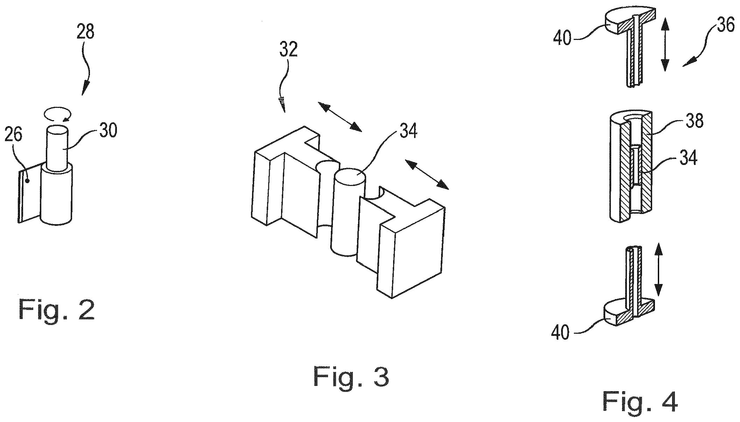

In der Aufwickelstation 28, die in Fig. 2 gezeigt ist, ist eine Antriebseinrichtung (nicht gezeigt) angeordnet, in der ein Wickeldorn 30 antreibbar und von dem Antrieb lösbar angeordnet ist. Der Gewebeabschnitt 26 wird nun unter Vorspannung auf den Wickeldorn 30 und auf sich selbst derart aufgewickelt, dass der Gewebeabschnitt 26 mit seiner im Inneren angeordneten Vorderkante derart zu seiner außen an der Umfangsoberfläche des aufgewickelten Gewebeabschnittes 26 anliegenden Endkante verläuft, dass über den gesamten Umfang des aufgewickelten Gewebeabschnittes 26 betrachtet immer die gleiche Anzahl Gewebelagen aufeinander liegt.

Der auf den Wickeldorn 30 aufgewickelte Gewebeabschnitt 26 wird nun in eine erste Umformstation 32 transportiert, die in Fig. 3 gezeigt ist. In der ersten Umformstation 32 wird der auf den Wickeldorn 30 aufgewickelte Gewebeabschnitt 26 bezogen auf seine Wickelachse radial verdichtet und zu einem Zwischenprodukt 34 umgeformt. Die Innenumfangsmaße sowie die Außenumfangsmaße des Zwischenproduktes 34 entsprechen dabei bereits zumindest annähernd den Endmaßen des fertigen Drahtformkörpers 10. Aus dem so geformten Zwischenprodukt 34 wird nun der Wickeldorn 30 entfernt und das Zwischenprodukt 34 einer zweiten Umformstation 36 zugeführt, die in Fig. 4 gezeigt ist.

In der zweiten Umformstation 36 (vgl. Fig. 4) wird das Zwischenprodukt 34 in eine Negativform 38 eingeführt, welche in Form eines Holzylinders ausgebildet ist. Anschließend wird in jedes offene Ende der Negativform 38 jeweils ein Umformstempel 40 eingeführt. Die Umformstempel 40 stauchen das Zwischenprodukt 34 von beiden Stirnseiten her gleichmäßig auf das Endmaß des Drahtformkörpers 10 zusammen.

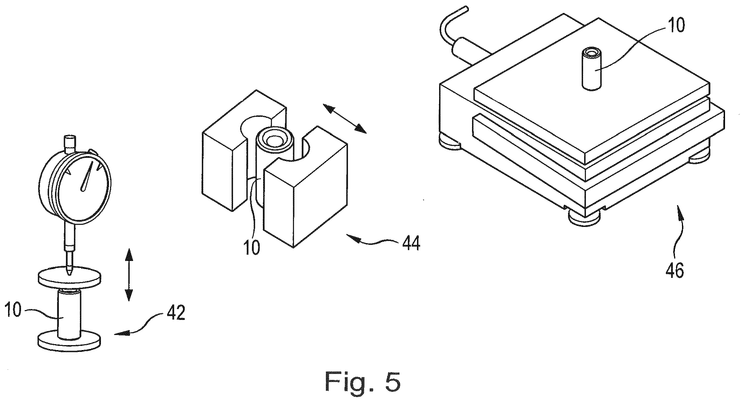

Anschließend wird der fertige Drahtformkörper 10 verschiedenen Prüfstation 42, 44 und 46 zugeführt, in denen die axiale Länge (Prüfstation 42), der Außendurchmesser (Prüfstation 44) sowie das Gewicht (Prüfstation 46) des fertigen Drahtformkörpers 10 ermittelt werden, wie in Fig. 5 gezeigt ist.

In Fig. 6 ist der Drahtformkörper 10 im Detail gezeigt. Der Drahtformkörper 10 hat eine rotationssymmetrische, zylindrische Außenumfangsfläche 48 sowie eine sich längs durch den Drahtformkörper 10 ersteckende Durchgangsbohrung 50 gleichbleibenden Innendurchmessers. Die Stirnseiten des Drahtformkörpers 10 sind jeweils mit einer Außenfase 52 und einer Innenfase 54 versehen.

Das besondere an dem Drahtformkörper 10 ist seine gleichmäßige und stetige Außenoberfläche sowie seine gleichmäßige und stetige Innenoberfläche. An sich sollte man davon ausgehen, dass zumindest die Vorderkante oder die Endkante an dem Drahtformkörper 10 eine leichte Unregelmäßigkeit in der Oberfläche bildet. Tatsächlich zeigt der Drahtformkörper 10 jedoch keinerlei Oberflächenunregelmäßigkeiten, wenn er mit dem erfindungsgemäßen Verfahren hergestellt wurde. Auch zeigt der Drahtformkörper 10 über seinen Querschnitt betrachtet eine gleichmäßige, homogene Struktur und Dichte, ohne dass feststellbare Verdichtungen in der Struktur erkennbar wären.

Mit dem erfindungsgemäßen Verfahren ist es erstmals möglich, Gewebeabschnitt zu Drahtformkörpern 10 umzuformen, die mit aus Drahtgestrickschläuchen hergestellten Drahtformkörpern vergleichbare Eigenschaften aufweisen.

Als besonders vorteilhaft hervorzuheben ist bei dem erfindungsgemäßen Verfahren auch die Tatsache, dass einerseits kein Materialverlust durch das Schneiden der Drahtgewebebänder 14 in die Gewebeabschnitte 26 auftritt. Andererseits müssen die Drähte, aus denen die Drahtgewebebänder 14 hergestellt worden sind, auch nicht mit Schmiermitteln vorbehandelt werden, so dass ein Reinigen des fertigen Drahtformkörpers 10 entfällt.

## Patentansprüche

1. Verfahren zur Herstellung eines Drahtformkörpers (10) aus einem Drahtgewebe (14), bei dem ein Gewebeabschnitt (26) definierter Länge quer zu seiner Längsrichtung auf sich selbst aufgewickelt wird, der auf sich selbst aufgewickelte Gewebeabschnitt (26) quer zu seiner Längsrichtung zu einem Zwischenprodukt (34) verdichtet wird, wobei der gewickelte Gewebeabschnitt (26) unmittelbar vor dem Umformen in das Zwischenprodukt (34) mit seiner im Inneren angeordnete Vorderkante derart zu seiner außen an der Umfangsoberfläche des aufgewickelten Gewebeabschnittes anliegenden Endkante verläuft, dass über den gesamten Umfang des aufgewickelten Gewebeabschnittes (26) betrachtet immer die gleiche Anzahl Gewebelagen aufeinander liegt, und
das Zwischenprodukt anschließend durch axiales Stauchen in den Drahtformkörper derart umgeformt wird, dass die Umfangsoberfläche des Drahtformkörpers einen zumindest annähernd stetigen, gleichmäßigen Verlauf zeigt, **dadurch gekennzeichnet, dass** der Gewebeabschnitt (26) mit derart großer axialer Vorspannung aufgewickelt wird, dass er während des Aufwickelns zumindest abschnittsweise eine plastische Verformung erfährt.

2. Verfahren nach Anspruch 1, bei dem der Gewebeabschnitt auf einen Wickeldorn (30) aufgewickelt wird.

3. Verfahren nach Anspruch 2, bei dem der Gewebeabschnitt in auf dem Wickeldorn aufgewickelten Zustand zu dem Zwischenprodukt umgeformt wird.

4. Verfahren nach Anspruch 2 oder 3, bei dem der Wickeldorn (30) zumindest vor dem axialen Stauchen des Zwischenproduktes in den Drahtformkörper entfernt wird.

5. Verfahren nach Anspruch 1, bei dem die Länge des Gewebeabschnittes (26) und der Grad der plastischen Verformung derart bemessen sind, dass sich der Gewebeabschnitt nach dem Aufwickeln so weit entspannt, dass er mit seiner im inneren angeordnete Vorderkante derart zu seiner außen an der Umfangsoberfläche des aufgewickelten Gewebeabschnittes anliegenden Endkante verläuft, dass über den gesamten Umfang des aufgewickelten Gewebeabschnittes betrachtet immer die gleiche Anzahl Gewebelagen aufeinander liegt.

6. Verfahren nach einem der Ansprüche 1 bis 5, bei dem der auf sich selbst aufgewickelte Gewebeabschnitt (26) beim Verdichten quer zu seiner Längsrichtung in das Zwischenprodukt gleichzeitig eine Streckung in Längsrichtung erfährt.

7. Verfahren nach einem der vorhergehenden Ansprüche, bei dem die Gewebeabschnitte (24) aus einem Drahtgewebeband quer zu dessen Längsrichtung geschnitten werden.

8. Verfahren nach Anspruch 7, bei dem das Drahtgewebeband (14) derart geschnitten wird, dass die beim Schneiden quer zur Längsrichtung entstehenden Kanten zumindest abschnittsweise unter einem vorgegebenen Winkel geneigt zur Längsrichtung des Drahtgewebebandes (14) verlaufen, wobei die Vorderkante komplementär zur Endkante des Gewebeabschnittes (26) ausgebildet wird.

9. Drahtformkörper (10), hergestellt durch ein Verfahren nach einem der Ansprüche 1 bis 8, wobei zusätzlich die Gewebeabschnitte aus einem Drahtgewebeband (14) quer zu dessen Längsrichtung geschnitten werden und das Drahtgewebeband (14) derart geschnitten wird, dass die beim Schneiden quer zur Längsrichtung entstehenden Kanten zumindest abschnittsweise unter einem vorgegebenen Winkel geneigt zur Längsrichtung des Drahtgewebebandes (14) verlaufen, wobei die Vorderkante komplementär zur Endkante des Gewebeabschnittes (26) ausgebildet wird.

## Claims

1. A method of manufacturing a shaped wire element (10) from a wire fabric (14), in which a fabric section (26) of a defined length is wound onto itself transversely to its longitudinal direction; the fabric section (26) wound onto itself is compacted into an intermediate product (34) transversely to its longitudinal direction, wherein, directly before the reshaping into the intermediate product (34), the inwardly arranged front edge of the wound fabric section (26) runs toward its end edge outwardly contacting the peripheral surface of the wound fabric section such that the same number of fabric layers are always disposed above one another viewed over the total periphery of the wound fabric section (26); and
the intermediate product is subsequently reshaped into the shaped wire element by an axial compression such that the peripheral surface of the shaped wire element has an at least approximately constant, uniform extent,
**characterized in that** the fabric section (26) is wound with such a large axial preload that it undergoes a plastic deformation at least sectionally during the winding.

2. A method in accordance with claim 1,
in which the fabric section is wound onto a winding spindle (30).

3. A method in accordance with claim 2,
in which the fabric section is reshaped into the intermediate product in a state wound onto the winding spindle.

4. A method in accordance with claim 2 or claim 3,
in which the winding spindle (30) is removed at least before the axial compression of the intermediate product into the shaped wire element.

5. A method in accordance with claim 1,
in which the length of the fabric section (26) and the degree of the plastic deformation are dimensioned such that the fabric section expands to such an extent after the winding that its inwardly arranged front edge runs toward its end edge outwardly contacting the peripheral surface of the wound fabric section such that the same number of fabric layers are always disposed above one another viewed over the total periphery of the wound fabric section.

6. A method in accordance with any one of the claims 1 to 5,
in which the fabric section (26) wound onto itself simultaneously undergoes an extension in the longitudinal direction on the compacting transversely to its longitudinal direction into the intermediate product.

7. A method in accordance with any one of the preceding claims,
in which the fabric sections (24) are cut from a wire fabric band transversely to its longitudinal direction.

8. A method in accordance with claim 7,
in which the wire fabric band (14) is cut such that the edges produced transversely to the longitudinal direction on the cutting extend at least sectionally inclined at a predefined angle with respect to the longitudinal direction of the wire fabric band (14), with the front edge being configured complementary to the end edge of the fabric section (26).

9. A shaped wire element (10) manufactured by a method in accordance with any one of the claims 1 to 8,
wherein the fabric sections are additionally cut from a wire fabric band (14) transversely to its longitudinal direction and the wire fabric band (14) is cut such that the edges produced transversely to the longitudinal direction on the cutting extend at least sectionally inclined at a predefined angle with respect to the longitudinal direction of the wire fabric band (14), with the front edge being configured complementary to the end edge of the fabric section (26).

## Revendications

1. Procédé de fabrication d'un corps façonné en fils métalliques (10) à partir d'un tissu métallique (14),
dans lequel une portion de tissu (26) d'une longueur définie est enroulée sur elle-même transversalement à sa direction longitudinale,
la portion de tissu (26) enroulée sur elle-même est compactée transversalement à sa direction longitudinale pour former un produit intermédiaire (34),
directement avant de la façonner en le produit intermédiaire (34), la portion de tissu enroulée (26) s'étend de par son arête avant, agencée à l'intérieur, de telle sorte par rapport à son arête d'extrémité appuyée à l'extérieur contre la surface périphérique de la portion de tissu enroulée, que vu sur la totalité de la périphérie de la portion de tissu enroulée (26), c'est toujours le même nombre de couches de tissu qui sont superposées, et
le produit intermédiaire est ensuite mis en forme de corps façonné en fils métalliques par refoulement axial de telle sorte que la surface périphérique du corps façonné en fils métalliques présente une évolution régulière au moins approximativement constante,
**caractérisé en ce que**
la portion de tissu (26) est enroulée avec une précontrainte axiale aussi importante qu'elle subit au moins localement une déformation plastique pendant l'enroulement.

2. Procédé selon la revendication 1,
dans lequel la portion de tissu est enroulée sur un mandrin d'enroulement (30).

3. Procédé selon la revendication 2,
dans lequel la portion de tissu est façonnée en produit intermédiaire dans l'état enroulé sur le mandrin d'enroulement.

4. Procédé selon la revendication 2 ou 3,
dans lequel le mandrin d'enroulement (30) est enlevé au moins avant le refoulement axial du produit intermédiaire en le corps façonné en fils métalliques.

5. Procédé selon la revendication 1,
dans lequel la longueur de la portion de tissu (26) et le degré de la déformation plastique sont d'une valeur telle que la portion de tissu se détend aussi loin après l'enroulement qu'elle s'étend de par son arête avant, agencée à l'intérieur, de telle sorte par rapport à son arête d'extrémité appuyée à l'extérieur contre la surface périphérique de la portion de tissu enroulée que, vu sur la totalité de la périphérie de la portion de tissu enroulée, c'est toujours le même nombre de couches de tissu qui sont superposées.

6. Procédé selon l'une des revendications 1 à 5,
dans lequel, lors du compactage en le produit intermédiaire transversalement à sa direction longitudinale, la portion de tissu (26) enroulée sur elle-même subit simultanément un étirage en direction longitudinale.

7. Procédé selon l'une des revendications précédentes,
dans lequel les portions de tissu (24) sont découpées à partir d'une bande de tissu métallique transversalement à sa direction longitudinale.

8. Procédé selon la revendication 7,
dans lequel la bande de tissu métallique (14) est coupée de telle sorte que les arêtes résultantes lors de la coupe transversalement à la direction longitudinale s'étendent au moins localement sous un angle prédéterminé en inclinaison par rapport à la direction longitudinale de la bande de tissu métallique (14), l'arête avant étant réalisée de façon complémentaire à l'arête d'extrémité de la portion de tissu (26).

9. Corps façonné en fils métalliques (10), fabriqué par un procédé selon l'une des revendications 1 à 8,
dans lequel, en supplément, les portions de tissu sont découpées à partir d'une bande de tissu métallique (14) transversalement à sa direction longitudinale, et la bande de tissu métallique (14) est coupée de telle sorte que les arêtes résultantes lors de la coupe transversalement à la direction longitudinale s'étendent au moins localement sous un angle prédéterminé en inclinaison par rapport à la direction longitudinale de la bande de tissu métallique (14), l'arête avant étant réalisée de façon complémentaire à l'arête d'extrémité de la portion de tissu (26).
